(19) Europäisches Patentamt / European Patent Office / Office européen des brevets

(11) **EP 4 343 713 A1**

(12) **EUROPEAN PATENT APPLICATION**

(43) Date of publication:
**27.03.2024  Bulletin 2024/13**

(21) Application number: **22197785.3**

(22) Date of filing: **26.09.2022**

(51) International Patent Classification (IPC):
**G06V 10/774** (2022.01)    **G06V 10/772** (2022.01)
**G06F 18/214** (2023.01)    **G06V 10/82** (2022.01)

(52) Cooperative Patent Classification (CPC):
**G06V 10/774; G06F 18/214; G06V 10/772;
G06V 10/82**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventor: **Sushko, Vadim
70174 Stuttgart (DE)**

(54) **TRAINING A GENERATOR TO PRODUCE MORE DIVERSE AND REALISTIC IMAGES**

(57)    A method (100) for training a target generator $G$ to map input vectors $z$ from a latent space $Z$ to generate images $G(z)$ in a target domain (2), comprising the steps of:
• providing (110) a source generator $G_s$ that has been pre-trained to generate, from the input vectors $z$, images $G_s(z)$ in a source domain (1);
• providing (120) a set of training images $I^*$ in the target domain (2);
• providing (130) a discriminator $D$ that is configured to classify whether an inputted image is a sample $I$ from the target domain or an image $G(z)$ generated by the target generator $G$;
• providing (140) a generator smoothness metric $S$ that measures to which extent a gradual change in the input vector $z$ causes a gradual change of the image $G_s(z)$ generated by the source generator $G_s$, respectively a gradual change of the image $G(z)$ generated by the target generator $G$;
• sampling (150) input vectors $z$ from the latent space $Z$;
• mapping (160), by the target generator $G$, the input vectors $z$ to images $G(z)$;
• pooling (170) the images $G(z)$ with training images $I^*$ into a pool $P$;
• providing (180) samples $p$ from the pool $P$ to the discriminator $D$;
• classifying (190), by the discriminator $D$, whether each sample $p$ is a generated image $G(z)$ or a sample $I$ from the target domain (2);
• optimizing (200) parameters (6) that characterize the behavior of the discriminator $D$ towards the goal of improving the classification accuracy; and
• optimizing (210) parameters (7) that characterize the behavior of the target generator $G$ towards the goals of
∘ deteriorating the classification accuracy; and
∘ minimizing a difference between the generator smoothness metrics $S(G_s)$ of the source generator $G_s$ and $S(G)$ of the target generator $G$.

Fig. 1a

Fig. 1b

**(Cont. next page)**

**Fig. 1a**

z

7*,G*

220

G(z)

231

230

232

5

4

3*

240

3a

250

250a

260

250a

50,60,70,80,90

**Fig. 1b**

**Description**

The present invention relates to trainable generators that produce images in a desired target domain. A main use case of such generated images is augmenting scarce training material for task machine learning models, such as image classifiers.

Background

A major bottleneck in the training of task machine learning models is the availability of a sufficient amount of training examples. To obtain more training examples given only a few existing training examples, a generator can be trained in a GAN setting in tandem with a corresponding discriminator. In the adversarial training, the generator learns how to produce, from a noise vector z in a latent space Z, "fake" images in a given target domain that the discriminator will (mis-)classify as real samples from that target domain.

In applications where only a few training examples in the target domain are initially available, there is a tendency that the generator may "memorize" those training examples and map most of the noise vectors z to exactly one of the training examples in the target domain. This is not useful for data augmentation that strives to produce new images in the target domain. To counteract this tendency to "memorize", (U. Ojha et al., "Few-shot image generation via cross-domain correspondence", arXiv: 2104.06820v1 (2021)) discloses to augment the objective function (loss function) of the training with a regularization term that measures whether the distribution of outputs delivered by a generator for images in the target domain is similar to the distribution of outputs delivered to a pre-trained generator for images in a different source domain.

Disclosure of the invention

The invention provides a computer-implemented method for training a target generator $G$ to map input vectors $z$ from a latent space $Z$ to generate images $G(z)$ in a target domain. The latent space $Z$ typically has a dimensionality that is a lot lower than the dimensionality of the generated image $G(z)$.

Images may be of any suitable nature. In particular, images may comprise camera images, video images, thermal images, ultrasound images, radar images and/or lidar images.

In the course of the method, a source generator $G_s$ is provided. This source generator $G_s$ has been pre-trained to generate, from the input vectors $z$, images $G_s(z)$ in a source domain. The reasoning behind the use of a source generator $G_s$ is two-fold: First, the pre-training in the source domain can be performed very thoroughly if training examples in the source domain are abundant. For example, the pre-training may be performed in a very generic source domain that comprises many sorts of images. Second, one and the same pre-training may be used multiple times for training a target generator $G$ to produce images in different target domains.

A set of training images $I^*$ in the target domain is provided. This set of training images $I^*$ may, for example, comprise only between 1 and 100 images, whereas a typical GAN training uses at least about 1000 training examples. Therefore, the present method provides a "few-shot" adaptation of the generator $G$ to the target domain.

A discriminator $D$ for the adversarial GAN training is provided. The discriminator $D$ is configured to classify whether an inputted image is a sample $I$ from the target domain ("real image") or an image $G(z)$ generated by the target generator ("fake image").

It has been observed that, if a GAN is well-trained, given two generated images $G(z_1)$ and $G(z_2)$, meaningful latent space interpolations lie between these images $G(z_1)$ and $G(z_2)$. That is, when proceeding in latent space from $z_1$ to $z_2$ in some continuous manner (like $\alpha z_1 + (1 - \alpha)z_2$), the generated image $G(\alpha z_1 + (1 - \alpha)z_2)$ will gradually change from $G(z_1)$ to $G(z_2)$. The intermediate images on the way tend to be meaningful transformations of an image, like changing the color or structure of objects, translation or zooming of objects. Mathematically, this corresponds to a smoothness of $G$. This smoothness is a desired property when striving for the generation of more diverse images: When moving from $z_1$ to $z_2$, if the generator $G$ is smooth, it no longer gets "stuck" on a particular training example before suddenly moving to the next one.

Therefore, a generator smoothness metric $S$ is provided. This generator smoothness metric $S$ measures to which extent a gradual change in the input vector $z$ causes a gradual change of the image $G_s(z)$ generated by the source generator $G_s$, respectively a gradual change of the image $G(z)$ generated by the target generator $G$.

For training the generator $G$, input vectors $z$ are sampled from the latent space $Z$. These input vectors $z$ are mapped to images $G(z)$ by the generator $G$. The images $G(z)$ are pooled with training images $I^*$ into a pool $P$. Optionally, the pool $P$ may also contain augmented versions of the training images $I^*$ that are different in some way while still comprising the same semantic content.

Samples p are drawn from the pool P and provided to the discriminator $D$. For each sample $p$, the discriminator $D$ classifies whether it is a generated ("fake") image $G(z)$ or a "real" sample $I$ from the target domain. Parameters that characterize the behavior of the discriminator $D$ are optimized towards the goal of improving the classification accuracy.

By contrast, optimizing parameters that characterize the behavior of the target generator $G$ towards the goal of deteriorating this classification accuracy. In this manner, the generator $G$ and the discriminator $D$ play the usual "cat-and-mouse game" of adversarial training. But in addition, the training is regularized. To this end, the parameters of the generator $G$ are also optimized towards the additional goal of minimizing a difference between the generator smoothness metrics $S(G_s)$ of the source generator $G_s$ and $S(G)$ of the target generator $G$.

It was found that a high amount of smoothness in a well-trained source generator $G_s$ is a property of the source generator $G_s$ that is not tied to the source domain. Thus, if the target generator $G$ mimicks the smoothness of the source generator $G_s$, experience gained during the pre-training of the source generator $G_s$ may be transferred into the training of the target generator $G$. One very visible effect of this is that, when moving from from $z_1$ to $z_2$ in the latent space $Z$, the intermediate images $G(\alpha z_1 + (1 - \alpha)z_2)$ become more realistic. That is, the path in the space of images that the intermediate images $G(\alpha z_1 + (1 - \alpha)z_2)$ follow is changed such that it moves through more realistic images. The reason for this is that the source generator $G_s$ has learned very well how to produce realistic images during its very thorough and diverse training in the source domain, and this experience is transferred to the target generator $G$ by minimizing the difference between the generator smoothness metrics $S(G_s)$ and $S(G)$. This is true even in a case where the source domain and the target domain are very dissimilar structurally.

In a particularly advantageous embodiment, the target generator $G$ is obtained and initialized by duplicating the source generator $G_s$. In this manner, the training of the target generator $G$ can build on the pre-training of the source generator $G_s$ even more. In particular, one single pre-training of the source generator $G_s$ can be better adapted to multiple target domains.

In a further particularly advantageous embodiment, the smoothness metric $S(G_s)$, $S(G)$ is dependent on the input vector $z$. The difference between $S(G)$ and $S(G_s)$ is computed as an expectancy over all $z \in Z$. In this manner, it is emphasized even more that the smoothless is a local property in the latent space $Z$ and may vary in this latent space $Z$. This permits to convey much more detail of the pre-training of the source generator $G_s$ to the target domain than a global property, such as a similarity between distributions of outputs of the generators $G_s$ and $G$ (also known as "cross-domain distance consistency regularization loss").

In a further particularly advantageous embodiment, the smoothness metric $S(G_s)$, $S(G)$ comprises the Jacobian matrix $J_{G_s}(z)$, respectively $J_G(z)$, of the source generator $G_s$, respectively of the target generator $G$. The Jacobian matrix comprises partial derivatives of all components of the respective output image $S(G_s)$, $S(G)$ on all components of the input vector $z$. Thus, the Jacobian matrix measures the smoothness in all directions in the latent space. One example for a smoothness similarity loss $\mathcal{L}_{ss}$ is $\mathcal{L}_{ss} = \mathbb{E}_z\left[\left\|J_G(z) - J_{G_s}(z)\right\|\right]$.

Because the Jacobian matrix contains very many partial derivatives, it is expensive to compute. To save some computation time, in another particularly advantageous embodiment, the smoothness metric $S(G_s)$, $S(G)$ comprises gradients $\nabla_z G_s(z)$, respectively $\nabla_z G(z)$, of images $G_s(z)$, respectively $G(z)$, with respect to $z$. These gradients are computable by standard back-propagation.

To further improve the convergence, the gradients $\nabla_z G_s(z)$, respectively $\nabla_z G(z)$, may be replaced by gradients $\nabla_z(G_s(z) \cdot x)$, respectively $\nabla_z(G(z) \cdot x)$, wherein x is a randomly drawn image from a predetermined distribution. For example, this distribution may be a normal distribution $N(0,1)$. If random images $x$ are used, then the smoothness metric $S(G_s)$, $S(G)$ is computed as an expectancy over all $x$ in the predetermined distribution to eliminate the dependency on $x$. Thus, another example for a smoothness similarity loss $\mathcal{L}_{ss}$ is

$$\mathcal{L}_{ss} = \mathbb{E}_{z,x \sim N(0,1)}\left[\left\|\nabla_z\left(G^j(z) \cdot x\right) - \nabla_z\left(G_s^j(z) \cdot x\right)\right\|\right]$$

. Herein, the superscript $j$ signifies that, optionally, the loss $\mathcal{L}_{ss}$ may be computed based on the output of an intermediate layer and/or block $j$ of the generator, rather than in the final image space.

In a further particularly advantageous embodiment, parameters that characterize the behavior of the target generator $G$ are optimized towards the further goal that, when the input vector $z$ is changed to a new input vector $z'$, the difference between a new image $G_s(z')$ and the previous image $G_s(z)$ corresponds to the same qualitative effect as the difference between a new image $G(z')$ and the previous image $G(z)$. That is, one particular change from $z$ to $z'$ causes same or similar properties to change when the image $G_s(z)$ changes to $G_s(z')$ on the one hand, and when the image $G(z)$ changes to $G(z')$ on the other hand. This is a further sign that the experience has been properly transferred from the source generator $G_s$ to the target generator $G$.

For example, the qualitative effect comprises a change of color, size, position, structure and/or texture of at least one object in the image.

In a further advantageous embodiment, the classification accuracy is measured with a loss function that has different contributions that depend on the outputs of different layers and/or blocks of the discriminator *D*. In this manner, the supervision of the domain adaptation by the discriminator *D* is improved.

A major use case of the target generator is the generating of training examples for training other machine learning models towards a particular task. Therefore, in another particularly advantageous embodiment, a plurality of input vectors *z* from the latent space *Z* is provided to the trained target generator *G*. The target generator *G* produces images *G*(*z*) from the input vectors *z*. A task machine learning model is trained with at least these images *G*(*z*) as training examples. Usually, these new training examples come on top of a set of already existing training examples. For example, such a set of already existing training examples may define the target domain in which the generator *G* is to generate images *G*(*z*).

In a particularly advantageous embodiment, the task machine learning model is an image classifier that maps images to classification scores with respect to one or more classes. The target domain is chosen such that images in this target domain all belong to a same class. In this manner, there is no need to manually label the newly generated images *G*(*z*) with ground truth class labels.

The training of the task machine learning model with the augmented training data set has the further advantageous effect that the task machine learning model achieves a better performance at its task. Therefore, in another particularly advantageous embodiment, images that have been acquired using at least one sensor are provided to the trained task machine learning model. From the output of the machine learning model, an actuation signal is computed. A vehicle, a driving assistance system, a surveillance system, a quality inspection system, and/or a medical imaging system, is actuated with the actuation signal. In this manner, the probability is improved that the reaction of the actuated system to the actuation signal is appropriate in the situation described by the images that have been acquired by the sensors.

The method may be wholly or partially computer-implemented and thus embodied in software. The invention therefore also relates to a computer program with machine-readable instructions that, when executed by one or more computers and/or compute instances, cause the one or more computers and/or compute instances to perform the method described above. Herein, control units for vehicles, and other embedded systems within technical devices that are able to execute machine-readable instructions, are to be regarded as computers as well. Examples for compute instances are virtual machines, containers or serverless execution environments in which machine-readable instructions may be executed in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

In the following, further advantageous embodiments will be illustrated using Figures without any intention to limit the scope of the invention.

Description of the Figures

The Figures show:

Figure 1 Exemplary embodiment of the method 100 for training a target generator *G*;

Figure 2 Illustration of the training process starting from a source generator $G_s$;

Figure 3 Illustration of the specific advantage of regularization based on a difference of smoothness metrics.

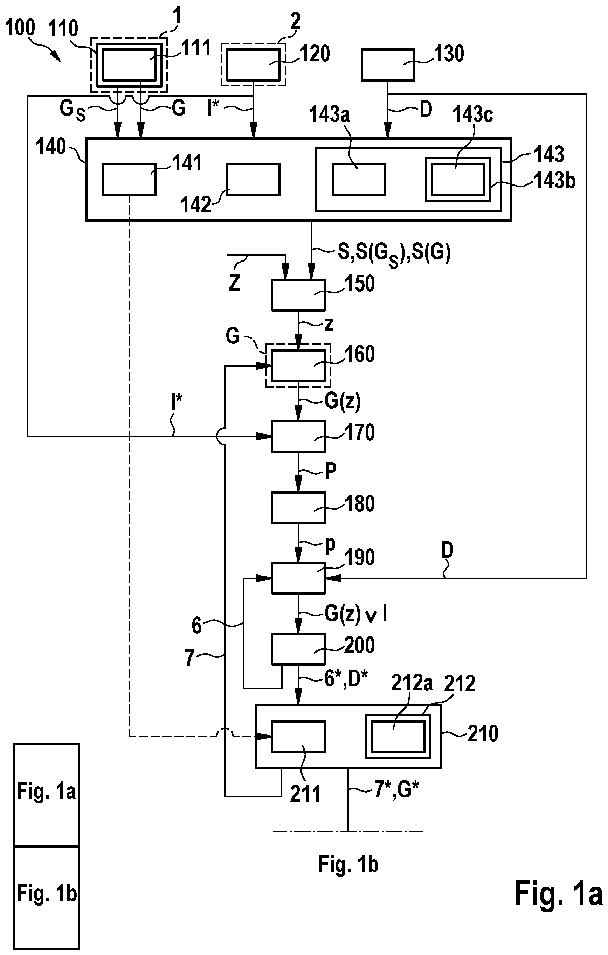

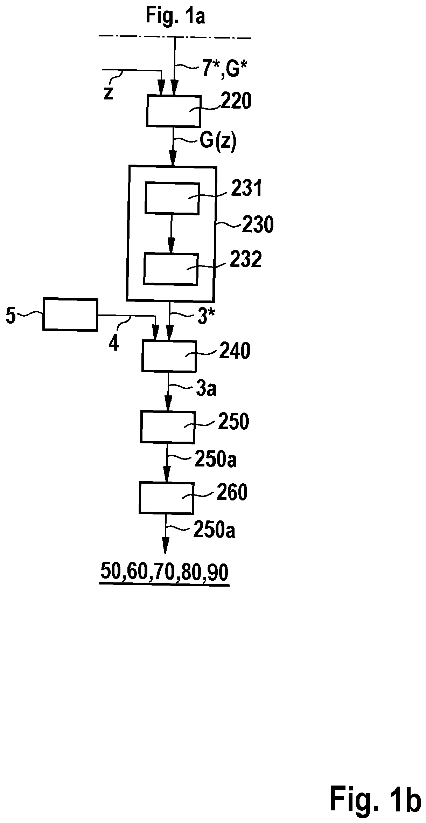

Figure 1 is a schematic flow chart of an embodiment of the method 100 for training a target generator *G*. The target generator *G* is configured to map input vectors *z* from a latent space *Z* to generate images *G*(*z*) in a target domain 2.

In step 110, a source generator $G_s$ is provided. This source generator $G_s$ has been pre-trained to generate, from the input vectors *z*, images $G_s(z)$ in a source domain 1.

According to block 111, the target generator G may be obtained and initialized by duplicating the source generator $G_s$. In this manner, the training of the target generator G is sort of jump-started by the pre-training of the source generator $G_s$.

In step 120, a set of training images *I** in the target domain 2 is provided. As discussed before, this can be a very limited set with only on the order of 1-100 images *I**.

In step 130, a discriminator *D* is provided. This discriminator *D* is configured to classify whether an inputted image is a "real" sample *I* from the target domain or a "fake" image *G*(*z*) generated by the target generator *G*.

In step 140, a generator smoothness metric S is provided. This metric S measures to which extent a gradual change in the input vector *z* causes a gradual change of the image $G_s(z)$ generated by the source generator $G_s$, respectively a gradual change of the image *G*(*z*) generated by the target generator *G*.

5

According to block 141, the smoothness metric $S(G_s)$, $S(G)$ may be chosen to be dependent on the input vector $z$.

According to block 142, the smoothness metric $S(G_s)$, $S(G)$ may comprise the Jacobian matrix $J_{G_s}(z)$, respectively $J_G(z)$, of the source generator $G_s$, respectively of the target generator $G$.

According to block 143, the smoothness metric $S(G_s)$, $S(G)$ may comprise gradients $\nabla_z G_s(z)$, respectively $\nabla_z G(z)$, of images $G_s(z)$, respectively $G(z)$, with respect to $z$.

According to block 143a, the smoothness metric $S(G_s)$, $S(G)$ may be computed based on the output of an intermediate layer and/or block of the source generator $G_s$, respectively of the target generator $G$.

According to block 143b, gradients $\nabla_z(G_s(z) \cdot x)$, respectively $\nabla_z(G(z) \cdot x)$, may be computed, wherein $x$ is a randomly drawn image from a predetermined distribution. In this case, according to block 143c, the smoothness metric $S(G_s)$, $S(G)$ may optionally be computed as an expectancy over all $x$ in the predetermined distribution.

In step 150, input vectors $z$ are sampled from the latent space $Z$.

In step 160, the target generator $G$ maps the input vectors $z$ to images $G(z)$.

In step 170, the images $G(z)$ are pooled together with training images $I^*$ (and optionally augmented variants thereof) into a pool $P$. In step 180, samples $p$ are drawn from this pool $P$ and provided to the discriminator $D$. The discriminator $D$ classifies in step 190 whether each sample $p$ is a "fake" generated image $G(z)$ or a "real" sample $I$ from the target domain 2.

For each sample p drawn from the pool P, it is known whether it should be classified as "fake" or "real", i.e., whether the classification outputted by the discriminator $D$ is correct. In step 200, parameters 6 that characterize the behavior of the discriminator $D$ are optimized towards the goal of improving the classification accuracy. The finally optimized state of the parameters is labelled with the reference sign 6*. This corresponds to a finally optimized state $D^*$ of the discriminator $D$.

In step 210, parameters 7 that characterize the behavior of the target generator $G$ towards two different goals. The first goal is deteriorating the classification accuracy, i.e., producing "fake" images that the discriminator D misclassifies as "real" images from the target domain 2. The finally optimized state of the parameters 7 is labelled with the reference sign 7*. This corresponds to a finally optimized state $G^*$ of the target generator $G$.

According to block 211, if the smoothness metric $S(G_s)$, $S(G)$ is dependent on the input vector $z$ according to block 141, the difference between $S(G)$ and $S(G_s)$ may be computed as an expectancy over all $z \in Z$.

According to block 212, the parameters 7 that characterize the behavior of the target generator $G$ may be optimized towards the further goal that, when the input vector $z$ is changed to a new input vector $z'$, the difference between a new image $G_s(z')$ and the previous image $G_s(z)$ corresponds to the same qualitative effect as the difference between a new image $G(z')$ and the previous image $G(z)$. In this manner, when the image $G_s(z)$ generated by the source generator $G_s$ and the image $G(z)$ generated by the target generator $G$ are viewed side by side, both images will change corresponding properties synchronously as $z$ is being changed to $z'$.

In step 220, a plurality of input vectors $z$ from the latent space $Z$ are provided to the target generator $G$ in its finally trained state $G^*$. This produces images $G(z)$, which are then used in step 230 for training a task machine learning model 3. This training is performed at least on the images $G(z)$. In a typical use case, the images $G(z)$ augment a training data set already on hand. The finally trained state of the task machine learning model 3 is labelled with the reference sign 3*.

According to block 231, the task machine learning model 3 may be chosen to be an image classifier that maps images to classification scores with respect to one or more classes. According to block 232, the target domain 2 may then be chosen such that images in this target domain 2 all belong to a same class.

After the task machine learning model 3 has been fully trained in this manner, it can be put to use. In step 240, images 4 that have been acquired using at least one sensor 5 are provided to the trained task machine learning model 3*. In step 250, an actuation signal 250a is computed from the output 3a of the trained task machine learning model 3*. In step 260, a vehicle 50, a driving assistance system 60, a surveillance system 70, a quality inspection system 80, and/or a medical imaging system 90, is actuated with the actuation signal 250a.

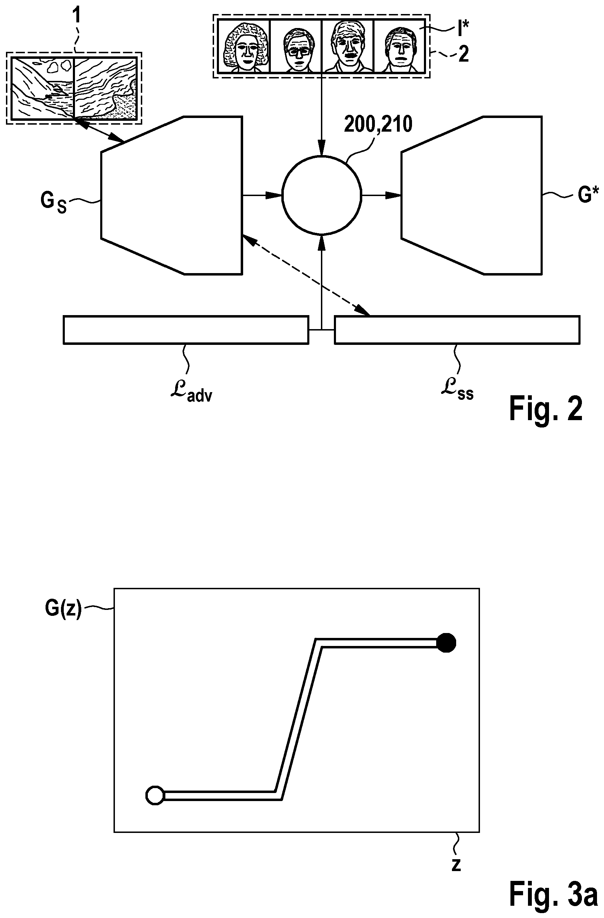

Figure 2 illustrates how the training process according to the method 100 proceeds starting from a pre-trained source generator $G_s$. As it is sketched in Figure 2, the source domain 1 on which the source generator $G_s$ has been pre-trained (here: images of seaside landscapes) can be completely disparate from the target domain 2 in which the target generator $G$ is to generate images $G(z)$ (here: faces). Only a small number of training images $I^*$ is available in this target domain.

In steps 200 and 210 of the method 100, the training is performed according to a loss function with two contributions. The first contribution $\mathcal{L}_{adv}$ measures how well the target generator $G$ "fools" the discriminator $D$ with the generated "fake" images $G(z)$. The second contribution $\mathcal{L}_{ss}$ measures the similarity of the smoothness $S(G_s)$ of the source generator $G_s$ to the smoothness $S(G)$ of the target generator $G$.

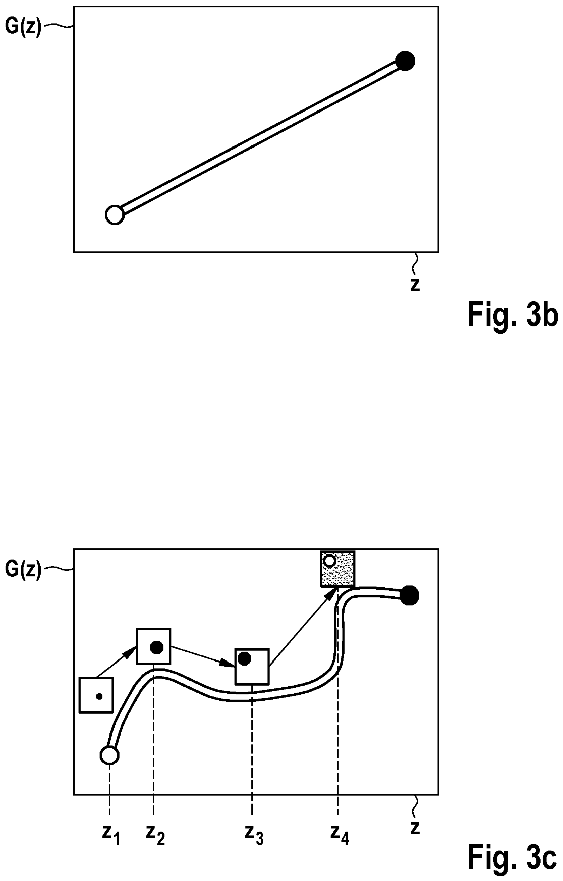

Figure 3 illustrates the specific advantage of regularization based on a difference of smoothness metrics $S(G_s)$ and $S(G)$. In each of Figures 3a to 3c, the generated image $G(z)$ is plotted as a function of the input vector $z$ in a simple two-dimensional projection to visualize the changes as a function of *z*.

Figure 3a shows *G(z)* as a function of *z* for a target generator *G* that has been trained solely for the adversarial goal, without any regularization as to smoothness of the generator *G*. The effect is that the generator G "memorizes" the few training examples. The outputted image *G(z)* sticks to one training example for a long time and then suddenly jumps to the next training example.

Figure 3b shows *G(z)* as a function of *z* for a target generator *G* that has been trained under perceptual path length regularization. This regularization causes the generated image *G(z)* smoothly and monotonously from one training example to the next. But this path may traverse areas in the image space where non-realistic images reside.

Figure 3c shows *G(z)* as a function of *z* for a target generator *G* that has been trained under regularization for smoothness similarity as per the proposed method. *G(z)* now follows a different path in image space as a function of *z*. Proceeding along this path always causes defined properties of the generated image *G(z)* to change. As it is illustrated in Figure 3c, when proceeding from $z_1$ to $z_2$, the image *G(z)* is zoomed into, and the dot shown in its center becomes larger. When proceeding further from $z_2$ to $z_3$, the image *G(z)* is translated, so the dot shifts from the center to the upper left corner. When proceeding further from $z_3$ to $z_4$, the image *G(z)* is inverted, so the black dot changes to white and the white background changes to black.

**Claims**

1. Computer-implemented method (100) for training a target generator *G* to map input vectors *z* from a latent space *Z* to generate images *G(z)* in a target domain (2), comprising the steps of:

   • providing (110) a source generator $G_s$ that has been pre-trained to generate, from the input vectors *z*, images $G_s(z)$ in a source domain (1);
   • providing (120) a set of training images *I\** in the target domain (2);
   • providing (130) a discriminator *D* that is configured to classify whether an inputted image is a sample *I* from the target domain or an image *G(z)* generated by the target generator *G*;
   • providing (140) a generator smoothness metric S that measures to which extent a gradual change in the input vector *z* causes a gradual change of the image $G_s(z)$ generated by the source generator $G_s$, respectively a gradual change of the image *G(z)* generated by the target generator *G*;
   • sampling (150) input vectors *z* from the latent space *Z*;
   • mapping (160), by the target generator *G*, the input vectors *z* to images *G(z)*;
   • pooling (170) the images *G(z)* with training images *I\** into a pool *P*;
   • providing (180) samples *p* from the pool *P* to the discriminator *D*;
   • classifying (190), by the discriminator *D,* whether each sample *p* is a generated image *G(z)* or a sample *I* from the target domain (2);
   • optimizing (200) parameters (6) that characterize the behavior of the discriminator *D* towards the goal of improving the classification accuracy; and
   • optimizing (210) parameters (7) that characterize the behavior of the target generator *G* towards the goals of

      ∘ deteriorating the classification accuracy; and
      ∘ minimizing a difference between the generator smoothness metrics $S(G_s)$ of the source generator $G_s$ and *S(G)* of the target generator *G*.

2. The method (100) of claim 1, wherein the target generator *G* is obtained and initialized (111) by duplicating the source generator $G_s$.

3. The method (100) of any one of claims 1 to 2, wherein

      • the smoothness metric $S(G_s)$, *S(G)* is dependent (141) on the input vector *z*; and
      • the difference between *S(G)* and $S(G_s)$ is computed (211) as an expectancy over all $z \in Z$.

4. The method (100) of any one of claims 1 to 3, wherein the smoothness metric $S(G_s)$, *S(G)* comprises (142) the Jacobian matrix $J_{G_s}(z)$, respectively $J_G(z)$, of the source generator $G_s$, respectively of the target generator *G*.

5. The method (100) of any one of claims 1 to 4, wherein the smoothness metric $S(G_s)$, *S(G)* comprises (143) gradients $\nabla_z G_s(z)$, respectively $\nabla_z G(z)$, of images $G_s(z)$, respectively *G(z)*, with respect to *z*.

6. The method (100) of claim 5, wherein the smoothness metric $S(G_s)$, $S(G)$ is computed (143a) based on the output of an intermediate layer and/or block of the source generator $G_s$, respectively of the target generator $G$.

7. The method (100) of any one of claims 5 to 6, wherein gradients $\nabla_z(G_s(z) \cdot x)$, respectively $\nabla_z(G(z) \cdot x)$, are computed (143b), wherein $x$ is a randomly drawn image from a predetermined distribution.

8. The method (100) of claim 7, wherein the smoothness metric $S(G_s)$, $S(G)$ is computed (143c) as an expectancy over all $x$ in the predetermined distribution.

9. The method (100) of any one of claims 1 to 8, wherein parameters (7) that characterize the behavior of the target generator $G$ are optimized (212) towards the further goal that, when the input vector $z$ is changed to a new input vector $z'$, the difference between a new image $G_s(z')$ and the previous image $G_s(z)$ corresponds to the same qualitative effect as the difference between a new image $G(z')$ and the previous image $G(z)$.

10. The method (100) of claim 9, wherein the qualitative effect comprises (212a) a change of color, size, position, structure and/or texture of at least one object in the image.

11. The method (100) of any one of claims 1 to 10, wherein the classification accuracy is measured with a loss function that has different contributions that depend on the outputs of different layers and/or blocks of the discriminator D.

12. The method (100) of any one of claims 1 to 11, further comprising:

   • providing (220), to the trained target generator $G$, a plurality of input vectors $z$ from the latent space $Z$, thereby obtaining images $G(z)$; and
   • training (230) a task machine learning model (3) with at least these images $G(z)$ as training examples.

13. The method (100) of claim 12, wherein

   • the task machine learning model (3) is chosen (231) to be an image classifier that maps images to classification scores with respect to one or more classes; and
   • the target domain (2) is chosen (232) such that images in this target domain (2) all belong to a same class.

14. The method (100) of claim 13, further comprising:

   • providing (240) images (4) that have been acquired using at least one sensor (5) to the trained task machine learning model (3*);
   • computing (250) an actuation signal (250a) from the output (3a) of the task machine learning model (3*); and
   • actuating (260) a vehicle (50), a driving assistance system (60), a surveillance system (70), a quality inspection system (80), and/or a medical imaging system (90), with the actuation signal (250a).

15. A computer program, comprising machine-readable instructions that, when executed by one or more computers and/or compute instances, cause the one or more computers and/or compute instances to perform the method (100) of any one of claims 1 to 14.

16. A machine readable data carrier and/or a download product with the computer program of claim 14.

17. One or more computers with the computer program of claim 15, and/or with the machine-readable data carrier and/or download product of claim 16.

Fig. 1a

Fig. 1b

## Fig. 1a

## Fig. 1b

**Fig. 2**

**Fig. 3a**

G(z)

z

# Fig. 3b

G(z)

$z_1$   $z_2$   $z_3$   $z_4$   z

# Fig. 3c

Europäisches
Patentamt

European
Patent Office

Office européen
des brevets

# EUROPEAN SEARCH REPORT

Application Number

**EP 22 19 7785**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | UTKARSH OJHA ET AL: "Few-shot Image Generation via Cross-domain Correspondence", ARXIV.ORG, CORNELL UNIVERSITY LIBRARY, 201 OLIN LIBRARY CORNELL UNIVERSITY ITHACA, NY 14853, 13 April 2021 (2021-04-13), XP081938013, * the whole document * | 1-17 | INV. G06V10/774 G06V10/772 G06F18/214 G06V10/82 |
| X | US 2021/150357 A1 (KARRAS TERO TAPANI [FI] ET AL) 20 May 2021 (2021-05-20) * the whole document * | 1-17 | |
| A | PANG YINGXUE ET AL: "Image-to-Image Translation: Methods and Applications", IEEE TRANSACTIONS ON MULTIMEDIA, IEEE, USA, vol. 24, 2 September 2021 (2021-09-02), pages 3859-3881, XP011916664, ISSN: 1520-9210, DOI: 10.1109/TMM.2021.3109419 [retrieved on 2021-09-03] * the whole document * | 1-17 | |
| | | | TECHNICAL FIELDS SEARCHED (IPC) |
| | | | G06V G06F |

The present search report has been drawn up for all claims

| Place of search | Date of completion of the search | Examiner |
|---|---|---|
| The Hague | 10 March 2023 | de Castro Palomares |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

EP 4 343 713 A1

## ANNEX TO THE EUROPEAN SEARCH REPORT
## ON EUROPEAN PATENT APPLICATION NO.

EP 22 19 7785

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2023

| Patent document cited in search report | Publication date | Patent family member(s) | Publication date |
|---|---|---|---|
| US 2021150357 A1 | 20-05-2021 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **U. OJHA et al.** Few-shot image generation via cross-domain correspondence. *arXiv: 2104.06820v1,* 2021